Europäisches Patentamt

European Patent Office

Office européen des brevets

(19)

(11) Publication number: **0 184 457**
**B1**

## EUROPEAN PATENT SPECIFICATION

(12)

(45) Date of publication of patent specification: **04.10.89**

(21) Application number: **85308869.8**

(22) Date of filing: **05.12.85**

(51) Int. Cl.⁴: **F 01 D 5/02, F 02 C 6/12, F 16 B 4/00**

(54) Turbocharger rotor shaft assembly.

(30) Priority: **06.12.84 US 678742**

(43) Date of publication of application:
**11.06.86 Bulletin 86/24**

(45) Publication of the grant of the patent:
**04.10.89 Bulletin 89/40**

(84) Designated Contracting States:
**AT BE DE FR GB IT NL SE**

(56) References cited:
**EP-A-0 139 406**
**EP-A-0 161 081**
**DE-A-2 056 382**
**DE-A-2 734 747**
**DE-A-3 343 203**
**DE-C- 471 417**
**GB-A-1 488 393**

**PATENTS ABSTRACTS OF JAPAN, vol. 8, no. 220 (M-330) 1657r, 6th October 1984; & JP - A - 59 103 902 (MITSUBISHI JUKOGYO K.K.) 15-06-1984**

(73) Proprietor: **ALLIED-SIGNAL INC. (a Delaware corporation)**
**Columbia Road and Park Avenue P.O. Box 2245R Morristown New Jersey 07960 (US)**

(72) Inventor: **Byrne, Joe Lemuel**
**3416 Del Amo Boulevard**
**Torrance California (US)**

(74) Representative: **Rees, David Christopher et al Kilburn & Strode 30 John Street London WC1N 2DD (GB)**

Courier Press, Leamington Spa, England.

EP 0 184 457 B1

## Description

The present invention relates to rotor-shaft assemblies of the type used in exhaust gas driven turbochargers, and more particularly to the attachment of a ceramic turbine rotor to a metal shaft.

One means of improving the response time of a turbocharger is to reduce the moment of inertia of the rotating parts by using parts made from lighter materials. However, the material chosen must be able to withstand the harsh operating environment of the turbocharger. Since a compressor impeller does not experience such high temperatures as the turbine rotor, designers have begun to make impellers from low weight aluminium alloys which can operate in the turbocharger environment.

In searching for a lighter, economically feasible alternative to the relatively heavy turbine rotor which could survive the high temperatures and environment of the turbine, designers turned to ceramic materials as a substitute. The use of a lighter, ceramic turbine rotor resulted in two alternative design choices; either a ceramic turbine rotor and metal shaft or an integral ceramic shaft and turbine rotor. However, there are problems associated with both solutions; the first requires a ceramic to metal joint and the second centres on the economics and durability of a ceramic shaft as compared to a metal shaft in addition to the problems associated with its attachment to the compressor impeller.

Most effort appears to have been devoted to solving the problem of the ceramic to metal joint as evidenced by U.S. Patents Nos. 4,063,850; 4,125,344 and 4,424,003 and German Patent No. 2,734,747. However, none of these proposals appear to have resulted in a reliable joint since there is no commercially available or production model of this type on the market, whether it be in turbochargers or any other turbomachinery. Several of these proposed structures focus on shrink fitting the ceramic stub shaft of the turbine wheel within a metallic sleeve while others have concentrated on the use of an adhesive in order to bond the two components of different materials together.

The shrink fit method of attachment gives rise to a further problem: the reduction in the imposition of the high tensile stresses upon the ceramic stub shaft by the sudden discontinuity of contact between the sleeve member and ceramic rotor. This problem has led to the design feature of gradually reducing the compressive forces exerted by the sleeve onto the shaft by substantially tapering the thickness of the sleeve. This reduction in the thickness of the sleeve results in a reduction in the compressive stresses acting on the rotor and the tensile stresses imposed on the rotor at the point where contact between the sleeve and the rotor ends. It is the tensile stresses which cause the propagation cracks in the ceramic material and can eventually lead to joint failure.

The high temperature, thermal cycling atmosphere of the turbocharger leads to the degradation and failure of the ceramic rotor-metal shaft joint. Failures occur for several reasons; the metal sleeve radially expands by a greater degree than the ceramic rotor because it has a coefficient of expansion greater than a ceramic thereby loosening the joint; thermal cycling causes "ratcheting", i.e. the easing out of the ceramic stub from the sleeve; and in the case of adhesives, the breakdown of the adhesive in the high temperature environment.

In addition to this problem of joint integrity, there exists a secondary problem of oil containment if the ceramic rotor or the ceramic to metal joint fails. Previously, none of the existing metal to ceramic joints appear to have incorporated any means of preventing oil leakage into the turbine housing in the event of a joint failure.

German Patent number 2056382 shows various forms of bore formed in a solid body. One of these bores comprises two sections of differing diameters with an intermediate incline section between them. However, this bore is intended to receive the rotary shaft of a drill or a tunnelling member and is therefore in an entirely different technical field to that of the present invention.

It is an object of the present invention to provide a turbocharger rotor shaft assembly in which a ceramic rotor is securely joined to a metal shaft, and a method of constructing such an assembly.

It is a further object of the invention to provide a turbocharger rotor shaft assembly incorporating a seal between the centre housing and the turbine housing, and means for preventing lubricant from entering the turbine housing in the event of a joint failure or ceramic rotor failure.

According to one aspect of the present invention there is provided a rotor shaft assembly for a turbocharger which comprises a ceramic rotor having a coaxial stub shaft, a metal shaft and a metal cylindrical sleeve member, the metal shaft being connected to the sleeve member in such a way as to transmit torque and the stub shaft of constant diameter being an interference fit within the sleeve member, characterised in that the interference fit of the stub shaft within the sleeve member is achieved by means of a first and a second bore section each of constant diameter and an intermediate section therebetween, the first section having a diameter which is smaller than that of the second section and which is located inboard of the second section.

The sleeve member is preferably in the form of an open-ended sleeve within which the metal shaft is received.

Alternatively, the sleeve member may have an open and a closed end, the metal shaft being attached to or integral with the closed end.

In order to help prevent relative axial movement between the sleeve member and the stub shaft, preferably, the stub shaft has an annular groove into which the sleeve member is crimped.

The tapered section of the stub shaft is preferably tapered by an amount of less than approximately 0.5 to 2.0°.

The sleeve member may include means forming a seal with the casing within which the assembly is located. Preferably, the means forming the seal comprises an outwardly extending hub portion on the sleeve member defining an annular surface area coaxial with the axis of the sleeve member, the area having an annular groove arranged to cooperate with a ring associate with the casing.

According to another aspect of the invention, there is provided a turbocharger for an internal combustion engine comprising: an exhaust gas driven ceramic turbine rotor having a coaxial stub shaft mounted within a turbine housing; a compressor impeller for compressing air for supply to the engine located within a compressor housing; a centre housing located between the turbine housing and the compressor housing and including bearings for rotatably supporting a metal shaft on which the compressor impeller is mounted; lubrication means for lubricating and cooling the bearings; and a sleeve member connecting the ceramic turbine rotor to the metal shaft in a torque receiving relationship the stub shaft of constant diameter being an interference fit within the sleeve member, the sleeve member including a sealing arrangement for preventing the passage of lubricant from the centre housing to the turbine housing, characterised in that the interference fit of the stub shaft within the sleeve member is achieved by means of a first and a second bore section each of constant diameter and an intermediate section therebetween, the first section having a diameter which is smaller than that of the second section and which is located inboard of the second section.

Preferably, the sleeve member in such a case is a generally cylindrical sleeve having a coaxial bore therethrough, the stub shaft of the rotor being cold press fitted within one of the bore. Preferably, the sealing arrangement is achieved firstly by the fact that the metal shaft is brazed within the other end of the bore, and secondly by a radially outward extending hub portion at one end of the sleeve member which includes an annular groove therearound, and a piston ring within said annular groove which also cooperates with the centre housing to prevent lubricant flow past the piston ring.

The present invention also extends to a method of joining a ceramic rotor having a stub shaft to a metal shaft comprising the steps of: forming a coaxial bore in a generally cylindrically shaped sleeve member; cold press fitting the stub shaft into the bore; and securing the shaft to the sleeve member opposite the rotor.

Such a method preferably also includes the step of machining an annular groove about the stub shaft and cold roll crimping the sleeve member into the groove after the stub shaft has been cold fitted into the sleeve bore.

The invention may be carried into practice in various ways and some embodiments will now be described by way of example with reference to the accompanying drawings, in which:-

Figure 1 is a schematic illustration of a turbocharger of a type employing the present invention shown operably coupled to an internal combustion engine;

Figure 2 is a cross-sectional view of a turbocharger including a rotor shaft assembly in accordance with the present invention;

Figure 3 is an enlarged partial cross-sectional view of a portion of the rotor shaft assembly of Figure 2;

Figure 4 is a cross-sectional view of another embodiment of a rotor shaft assembly in accordance with the present invention;

Figure 5 is a cross-sectional view of still another embodiment of a rotor shaft assembly in accordance with the present invention;

Figure 6 is a cross-sectional view of the preferred rotor shaft assembly shown in Figures 2 and 3; and

Figure 7 is an enlarged expanded view of a portion of the sleeve in Figures 2, 3, 5 and 6.

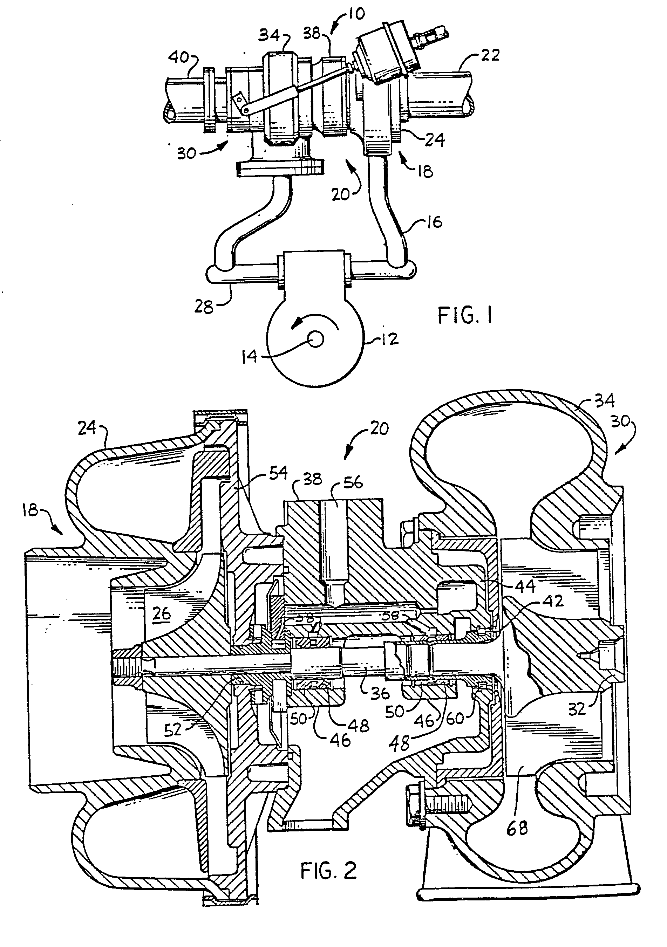

A turbocharged engine system 10 is shown in Figures 1 and 2, which generally comprises a combustion engine 12, such as gasoline or diesel powered internal combustion engine having a plurality of combustion cylinders (not shown), for rotatably driving an engine crankshaft 14. The engine includes an air intake conduit or manifold 16 through which air is supplied by means of a compressor 18 of the turbocharger 20. In operation the compressor 18 draws in ambient air through an air inlet 22 into a compressor housing 24 and compresses the air by means of a compressor impeller 26 to form so called charge air for supply to the engine for combustion purposes.

Exhaust products are discharged from the engine through an exhaust conduit or manifold 28 for supply to a turbine 30 of the turbocharger 20. The high temperature (up to 1000°C) exhaust gas rotatably drives a turbine wheel 32 within the turbine housing 34 at a relatively high rotational speed (up to 190K RPM) to drive correspondingly the compressor impeller 26 within the compressor housing 24. In this regard, the turbine wheel and compressor impeller are carried for simultaneous rotation on a common shaft 36 supported within a centre housing 38. After driving the turbine wheel 32, the exhaust gases are discharged from the turbocharger 20 to an exhaust outlet 40 which may conveniently include pollution or noise abatement equipment as desired.

The turbocharger, as is shown in Figure 2, comprises the compressor impeller 26 carried on a rotatable shaft 36 within the compressor housing 24. The shaft 36 extends from the impeller 26 through a centre housing 38 and an opening 42 formed through the centre housing wall 44 for connection to the turbine wheel 32 carried within the turbine housing 34. A compressor back plate 54 separates the centre housing 38 and the impeller 26.

The centre housing 38 includes a pair of bearing bosses 46 which are axially spaced from one another. The bearing bosses 46 form bearing bores 48 which house suitable journal bearings 50 for rotatably receiving and supporting the shaft 36. A thrust bearing assembly 52 is also carried about the shaft for preventing axial excursions of the shaft.

Lubricant such as engine oil or the like is supplied via the centre housing 38 to the journal bearings 50 and to the thrust bearing assembly 52. A lubricant inlet port 56 is formed in the centre housing 38 and is adapted for connection to a suitable source of lubricant such as filtered engine oil. The port 56 communicates with a network of internal supply passages 58 which are suitably formed in the centre housing 38 to direct the lubricant to the appropriate bearings. The lubricant circulated to the bearings is collected in a suitable sump or drain for passage to appropriate filtering, cooling and recirculation equipment, all in a known manner. To provide against leakage of the lubricant from the centre housing 38 into the turbine housing 34 a seal or piston ring 60 is received within an annular groove in the surface of the side wall which defines the shaft opening 42.

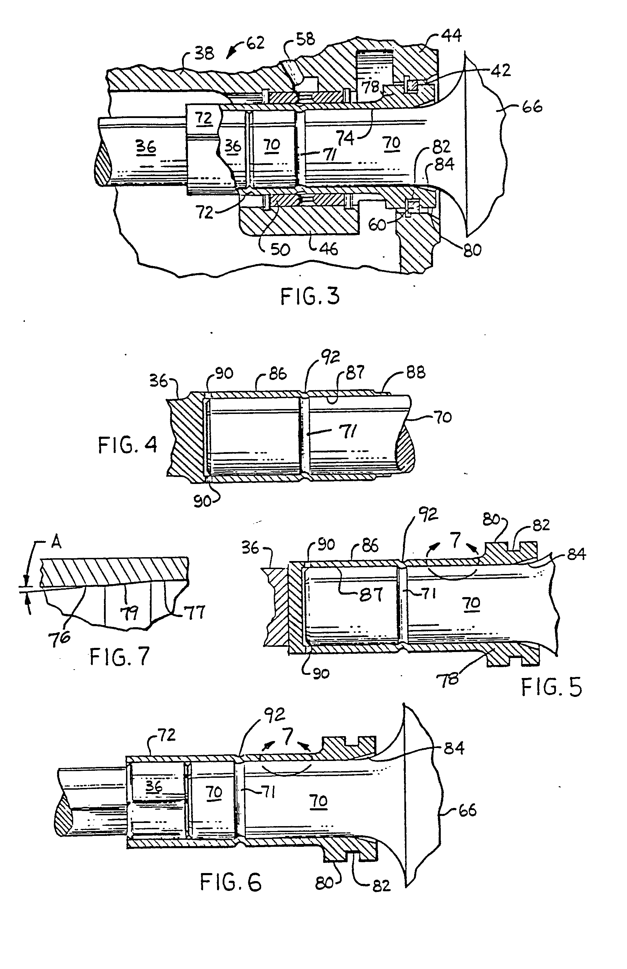

The rotor-shaft assembly of the present invention is shown in Figures 3 and 6 in its preferred form. The assembly 62 includes a ceramic rotor and a metal sleeve member 72. The ceramic rotor or ceramic turbine wheel 32 includes a hub 66 and a plurality of blades 68 (see Figure 2) periodically spaced about the circumference of the hub 66. The rotor 32 further includes a stub shaft 70 integral with and generally symmetrical about the axis of the hub 66. In addition, the stub shaft 70 includes an annular groove 71 therearound having a depth of approximately 0.010 inches (0.25 mm) and located at a desired axial distance from the back face of the rotor blades 68.

The metal sleeve member 72 is generally cylindrically shaped and includes a coaxial bore 74 therethrough which may be cast, machined or otherwise formed therein. The bore 74 defines three distinct sections as shown in Figure 7: a first and a second section, 76 and 77 respectively, of constant diameter and a tapered section 79 therebetween. The first section 76 is sized to be an interference fit with the stub shaft 70 of rotor 32. The second section 77 has a diameter greater than that of the diameter of the first section 76 and is also sized such that it is slightly larger than the diameter of the stub shaft 70. The tapered section 79 acts as a transition between the first and second sections and accordingly is tapered radially outward in the direction of the rotor 32 (left to right in Figures 3 to 6) by an angle A.

The taper reduces the clamping forces on the stub shaft 70 by reducing the degree of interference fit. Thus, the tapering of the sleeve member 72 results in a scheduling of or gradual change in the compression forces acting on the stub shaft 70 from some maximum value at the inboard end (compressor end) of the tapered section 79 to a minimum value at the outboard end (turbine end) of this same section. This feature in turn minimises the tensile stresses exerted upon the stub shaft 70 due to the sudden discontinuity in the degree of the compressive forces, yet permits torque transmission. Furthermore, the tapering assists in piloting the stub shaft 70 into the proper coaxial relationship with the sleeve member 72 during assembly.

By way of example, where the finished outside diameter of the sleeve 72 is approximately 0.360 inches (9.14 mm) and the diameter of the stub shaft 70 is approximately 0.310 inches (7.79 mm) the magnitude of angle A is approximately 1° and the total change in the diameter of the cavity 74 is approximately 0.0016 to 0.0020 inches (0.014 to 0.051 mm). Since there is only a slight difference (ideally zero clearance) between the diameters of the stub shaft 70 and the section 77, the amount of interference fit equals the change in the cavity diameter. Whenever upscaling or downscaling the rotor-shaft assembly of the present invention, the interference fit is preferably adjusted in order to give the same degree of compressive stresses as occurs in the above example. Typically, the angle A can have a magnitude of approximately 0.5 to 2.0°.

At the outboard end of the sleeve 72 there is a generally radially outwardly extending hub portion 78 which defines an annular surface area 80 coaxial to the sleeve member 72. The annular surface area 80 includes an annular piston ring groove 82 therein which is suitably dimensioned to receive the piston ring 60 located within the centre housing 38 of the turbocharger 20. In the assembled state, the hub portion 78 extends radially away from the stub shaft 70 thereby creating an annular gap 84 of increasing diameter in the direction of the rotor blades 68.

This feature ensures that if failure of the joint or breakage of the ceramic rotor 32 occurs, the seal between the centre housing 38 and the turbine housing 34 remains intact. Furthermore, the method of attaching the shaft 36 to the sleeve 72 eliminates any potential flow path from the centre housing 38 to the turbine housing 34 in those cases where the ceramic rotor stub shaft 70 rachets itself from the sleeve 72. Hence, sealing is a combination of piston ring 60 and the braze joint between the metal shaft 36 and the sleeve 72. Together they prevent oil leakage on failure of the metal-to-ceramic joint or failure of the ceramic material. Additionally, the piston ring 60 provides the normal function of sealing during normal operation.

An alternative rotor-shaft assembly is shown in Figure 4. The assembly of Figure 4 shows the metal shaft 36 including an enlarged end which defines a sleeve portion 86 having a coaxial bore 87 therein. The outer surface 88 of the outboard end of the enlarged sleeve portion 86 is reduced in thickness in order to reduce gradually the compressive forces acting on the stub shaft 70. This method of reducing the compressive forces is different from the method used in the preferred embodiment, which employed a reduction in the degree of interference fit rather than a reduction in sleeve material thickness.

At least one passage 90 extending radially outward from the bore 87 connects the bore to the ambient conditions. The passage 90 acts as a pressure relief during insertion of the stub shaft 70 into the bore 87 to avoid a buildup of compressed air. As shown, the stub shaft 70 is formed with the annular groove 71. After insertion of the stub shaft 70 into the sleeve 72, a crimp 92 is rolled into the sleeve 72 as will be explained below.

A second alternative rotor-shaft assembly is shown in Figure 5. This assembly includes an enlarged shaft end which defines a sleeve portion 86 and includes a central aperture, or cavity or bore 87 which is generally symmetrically distributed about axis of the shaft. As with the preferred embodiment, the surface area defining the bore defines the three distinct sections; 76, 77 and 79, as explained above. The tapered section 79 reduces the interference fit and therefore the compressive forces on the stub shaft 70 which in turn acts to minimise the tensile stresses in the stub shaft 70 as explained above.

Adjacent the inboard end of the bore is at least one radially extending aperture 90 which extends through the sleeve portion and connects the bore to ambient conditions. Again these apertures act as a pressure relief. In addition, the sleeve member 86 has been roll crimped into the groove 71 on the stub shaft 70 in order to prevent axial movement between the stub shaft 70 and the sleeve 86.

The embodiment of Figure 5 also includes a shaft seal arrangement similar to that of the embodiment of Figures 3 and 6. This arrangement includes a hub portion 78 on the sleeve member 86 which has a groove 82 arranged to receive the piston ring 60. This acts to prevent lubricant supplied to the bearings 50 from leaking along the shaft and into the turbine housing 34 in the event of failure of the ceramic rotor or the rotor-shaft joint.

In all embodiments, the sleeve 72, 86 is located within the bearing 50 nearest the turbine end of the turbocharger. This placement assists in lessening the degree of thermal cycling experienced by the joint. Hence, loosening of the joint by thermal expansion of the sleeve and/or ratcheting is minimised. Additionally all embodiments have been shown to include the groove 71 in the stub shaft 70 and a rolled crimp 92 in the sleeve member 72, 86. This feature is optional, and is not necessary for a working ceramic to metal joint, but is nevertheless preferred.

Figures 4, 5 and 6 also show the progression of the problems encountered and the solutions arrived at during the development of the present invention. In the embodiment of Figure 4, the sleeve portion 86 is to be constructed of the same material as the shaft 36, more particularly Incoloy 903, 907 or 909. It is well known in the art that this alloy possesses a low thermal expansivity and great strength, yet it is costly in comparison to a steel alloy.

Therefore, in an attempt to reduce the amount of Incoloy, it was proposed to make only the sleeve 86 (Figure 5) from this alloy. This led to the problem of attaching the Incoloy sleeve 86 to a steel shaft 36 as well as the sleeve 86 to a ceramic rotor 32. Two alternative methods of attachment were arrived at. The first was to have a closed inboard sleeve end as shown in Figure 5 and the second was to open the sleeve end as shown in Figure 6. In the case of the closed end of Figure 5, the end of the shaft 36 has to be friction or inertia welded to the back side of the sleeve member 86. This method of attachment led to a problem in gripping the sleeve 86 without crushing it and/or the stub shaft 70 during the welding process. This problem then led to the development of the open end design as shown in Figure 6 and the method of sleeve to shaft attachment described below.

The embodiment of Figure 6 has a further advantage in that the alternative embodiments of Figures 4 and 5 impose the additional burden of having to machine a blind hole. Machining a blind hole is more costly than machining an open ended sleeve as shown in Figure 6.

In the embodiment shown in Figure 6, the rotorshaft assembly is constructed by first cold press fitting the ceramic stub shaft 70 into the sleeve hub portion 76. During this operation the stub shaft 70 is piloted into the sleeve bore 74, assisted by the tapered section 79. After insertion of the stub shaft 70, the groove 71 is located within the section 76 which is inboard of the tapered section 79.

Thereafter, the outer surface of the sleeve member 72 is roll crimped at 92 in order to force sleeve material into the annular groove 71 of the stub shaft 70. The roll crimping of the sleeve into the groove 71 is accomplished by using a tube cutter having a radiused cutting edge which deforms the metal rather than cutting it. The deformation of the sleeve material into the groove 71 acts as a mechanical lock preventing the tendency of the ceramic stub shaft to ratchet itself out of the sleeve 72 due to differential thermal expansion of the two materials during thermal cycling of the joint while operating the turbocharger.

It should be noted that while this operation results in sleeve material being forced into the groove 71 in the stub shaft 70, the crimp in the outer surface of the sleeve 72 is exaggerated in the drawings. In reality, this crimp in the outer surface of the sleeve cannot be felt or seen by the naked eye after final machining. Furthermore, the groove 71 is not completely filled with sleeve material nor is it necessary that it is. All that need be accomplished is that enough sleeve material is deformed so as to act as a mechanical detent at each end of groove 71 to prevent axial movement between the sleeve 72 and the stub shaft 70.

Once the rotor 32 and sleeve member 72 are attached, the inboard end of the sleeve 72 is brazed or interference fitted onto the shaft 36 (in the case of the sleeve member 72 as shown in the embodiment of Figure 6). Brazing is accomplished by depositing braze material into the sleeve base adjacent the end of the stub shaft 70. The end of shaft 36 is then inserted into the sleeve 72 until it abuts the braze material. Thereafter, heat is applied using induction coils until the braze material wicks out of the sleeve 72, signalling that the gap between the inner surface of the sleeve 72 and the metal shaft 36 has been completely filled.

Cold press fitting of the stub shaft 70 within the sleeve 72 is an improvement in the art, since it allows the sleeve 72 to retain its mechanical properties. On the other hand, the previously known shrink-fit method of attachment between a metal sleeve and a ceramic rotor weakens the sleeve material in the sense that the material has been annealed or tempered by the heat shrinking process and therefore loosens more easily when subjected to the thermal cycling atmosphere of a turbocharger.

## Claims

1. A rotor shaft assembly for a turbocharger which comprises a ceramic rotor (32) having a coaxial stub shaft (70), a metal shaft (36) and a metal cylindrical sleeve member (72, 86), the metal shaft (36) being connected to the sleeve member (72, 86) in such a way as to transmit torque and the stub shaft of constant diameter (70) being an interference fit within the sleeve member (72, 86), characterised in that the interference fit of the stub shaft (70) within the sleeve member (72, 86) is achieved by means of a first and a second bore section (76, 77) each of constant diameter and an intermediate section (79) therebetween, the first section (76) having a diameter which is smaller than that of the second section (77) and which is located inboard of the second section.

2. An assembly as claimed in Claim 1 characterised in that the sleeve member is in the form of an open-ended sleeve (72) within which the metal shaft (36) is received.

3. An assembly as claimed in Claim 2 characterised in that the sleeve (72) is brazed to the metal shaft (36).

4. An assembly as claimed in Claim 1 characterised in that the sleeve member (86) has an open and a closed end, the metal shaft (36) being attached to or integral with the closed end.

5. An assembly as claimed in any preceding claim characterised in that the stub shaft (70) has an annular groove (71) into which the sleeve member (72, 86) is crimped.

6. An assembly as claimed in any preceding claim characterised in that the tapered section is tapered by an amount between 0.5 and 2.0°.

7. An assembly as claimed in any preceding claim characterised in that the sleeve member (72, 86) includes means (80, 82) forming a seal with the casing (44) within which the assembly is located.

8. An assembly as claimed in Claim 7 characterised in that the means forming the seal comprises an outwardly extending hub portion on the sleeve member (72, 86) defining an annular surface area (80) coaxial with the axis of the sleeve member (72, 86), the area (80) having an annular groove (82) arranged to cooperate with a ring (60) associated with the casing (44).

9. A turbocharger (10) for an internal combustion engine (12) comprising: an exhaust gas driven ceramic turbine rotor (32) having a coaxial stub shaft (70) mounted within a turbine housing (34); a compressor impeller (26) for compressing air for supply to the engine (12) located within a compressor housing (24); a centre housing (38) located between the turbine housing (34) and the compressor housing (24) and including bearings (50) for rotatably supporting a metal shaft (36) on which the compressor impeller (26) is mounted; lubrication means for lubricating and cooling the bearings (50); and a sleeve member (72, 86) connecting the ceramic turbine rotor (32) to the metal shaft (36) in a torque receiving relationship the stub shaft (70) of constant diameter being an interference fit within the sleeve member, the sleeve member (72, 86) including a sealing arrangement (60, 82) for preventing the passage of lubricant from the centre housing (38) to the turbine housing (34), characterised in that the interference fit of the stub shaft (70) within the sleeve member (72, 86) is achieved by means of a first and a second bore section (76, 77) each of constant diameter and an intermediate section (79) therebetween, the first section (76) having a diameter which is smaller than that of the second section (77) and which is located inboard of the second section.

10. A turbocharger as claimed in Claim 9 characterised in that the sleeve member (36) is a generally cylindrical sleeve (72) having a coaxial bore therethrough, the stub shaft (70) of the rotor (32) being cold press fitted within one end of the bore, and further characterised in that the sealing arrangement is achieved firstly by the fact that the metal shaft (36) is brazed within the other end of the bore, and secondly by a radially-outward extending hub portion (80) at one end of the sleeve member (72) which includes an annular groove (82) there around, and a piston ring (60) within said annular groove which also cooperates with the centre housing (38) to prevent lubricant flow past the piston ring (60).

## Patentansprüche

1. Rotorwellenanordnung für einen Turbolader, der einen Keramikrotor (32) mit einer koaxialen Stummelwelle (70), eine Welle (36) aus Metall und ein zylindrisches Hülsenbauteil (72, 86) aus Metall aufweist, wobei die Metallwelle (36) mit dem Hülsenbauteil (72, 86) so verbunden ist, daß ein Drehmoment übertragen wird und die Stummelwelle mit konstantem Durchmesser (70) innerhalb des Hülsenbauteiles (72, 86) mit Festsitz angeordnet ist, dadurch gekennzeichnet, daß der Festsitz der Stummelwelle (70) innerhalb des Hülsenbauteiles (72, 86) mit Hilfe eines ersten und eines zweiten Bohrungsabschnittes (76, 77) erreicht wird, deren jeder einen konstanten Durchmesser hat und zwischen denen ein Zwischenabschnitt (79) vorgesehen ist, wobei der erste Abschnitt (76) einen Durchmesser aufweist, der kleiner ist als der des zweiten Abschnittes (77) und der nach innen in Bezug auf den zweiten Abschnitt angeordnet ist.

2. Anordnung nach Anspruch 1, dadurch gekennzeichnet, daß das Hülsenbauteil die Form einer Hülse (72) mit offenem Ende hat, innerhalb welcher die Metallwelle (36) aufgenommen wird.

3. Anordnung nach Anspruch 2, dadurch gekennzeichnet, daß die Hülse (72) mit der Metallwelle (36) verlötet ist.

4. Anordnung nach Anspruch 1, dadurch gekennzeichnet, daß das Hülsenbauteil (86) ein offenes und ein geschlossenes Ende aufweist, wobei die Metallwelle (36) mit dem geschlossenen Ende befestigt oder einstückig mit ihm ausgebildet ist.

5. Anordnung nach einem der vorausgehenden Anspruche, dadurch gekennzeichnet, daß die Stummelwelle (70) eine Ringnut (71) aufweist, in die das Hülsenbauteil (72, 86) umgebogen ist.

6. Anordnung nach einem der vorausgehenden Ansprüche dadurch gekennzeichnet, daß der verjüngte Abschnitt um einen Wert zwischen 0,5 und 2,0° verjüngt ist.

7. Anordnung nach einem der vorausgehenden Ansprüche dadurch gekennzeichnet, daß das Hülsenbauteil (72, 86) eine Vorrichtung (80, 82) aufweist, die eine Abdichtung mit dem Gehäuse (44) bildet, in welchem die Anordnung untergebracht ist.

8. Anordnung nach Anspruch 7, dadurch gekennzeichnet, daß die die Dichtung ausbildende Vorrichtung ein sich nach außen erstreckendes Nabenteil auf dem Hülsenbauteil (72, 86) aufweist, die eine Ringfläche (80) koaxial zur Achse des Hülsenbauteiles (72, 86) festlegt, wobei die Ringfläche (80) eine Ringnut (82) besitzt, die so ausgelegt ist, daß sie mit einem dem Gehäuse (44) zugeordneten Ring (60) zusammenwirkt.

9. Turbolader (10) für eine Brennkraftmaschine, mit einem abgasgetriebenen keramischen Turbinenrotor (32), der eine innerhalb eines Turbinengehäuses (34) befestigte koaxiale Stummelwelle (70) aufweist, mit einem Kompressorlaufrad (26) zum Komprimieren von Luft zur Einspeisung in den Verbrennungsmotor (12), das innerhalb eines Kompressorgehäuses (24) angeordnet ist, mit einem zentrischen Gehäuse (38), das zwischen Turbinengehäuse (34) und Kompressorgehäuse (24) angeordnet ist und Lager (50) zum drehbaren Aufnahme einer Metallwelle (36) aufweist, auf der das Kompressorlaufrad (26) befestigt ist, mit einer Schmiervorrichtung zum Schmieren und Kühlen der Lager (50), und mit einem Hülsenbauteil (72, 86), das den Keramik-Turbinenrotor (32) mit der Metallwelle (36) zur Drehmomentaufnahme verbindet, wobei die Stummelwelle (70) konstanten Durchmessers einen Festsitz innerhalb des Hülsenbauteiles hat und das Hülsenbauteil (72, 86) eine Abdichtanordnung (60, 82) zur Verhinderung des Durchganges von Schmiermittel aus dem zentrischen Gehäuse (38) in das Turbinengehäuse (34) aufweist, dadurch gekennzeichnet, daß der Festsitz der Stummelwelle (70) innerhalb des Hülsenbauteiles (72, 86) mit Hilfe eines ersten und eines zweiten Bohrungsabschnittes (76, 77) jeweils konstanten Durchmessers und einem dazwischen angeordneten Zwischenabschnitt (79) erzielt wird, wobei der erste Abschnitt (76) einen Durchmesser hat, der kleiner ist als der des zweiten Abschnittes (77) und in Bezug auf den zweiten Abschnitt innen angeordnet ist.

10. Turbolader nach Anspruch 9, dadurch gekennzeichnet, daß das Hülsenbauteil (36) eine etwa zylindrische Hülse (72) mit einer durchgehenden koaxialen Bohrung ist, daß die Stummelwelle (70) des Rotors (32) kaltgepreßt in ein Ende der Bohrung eingesetzt ist, und daß die Abdichtung dadurch erreicht wird, daß zum einen die Metallwelle (36) innerhalb des anderen Endes der Bohrung verlötet wird, und zum anderen ein radial nach außen verlaufender Nabenteil (80) am einen Ende des Hülsenbauteiles (72) eine Ringnut (82) und einen Kolbenring (60) innerhalb der Ringnut aufweist, welcher mit dem zentrischen Gehäuse (38) zusammenwirkt, um den Schmiermittelfluß am Kolbenring (60) vorbei zu verhindern.

**Revendications**

1. Assemblage d'un rotor et d'un arbre pour un turbocompresseur, qui comprend un rotor en céramique (32) à bout d'arbre coaxial (70), un arbre en métal (36) et un manchon cylindrique en métal (72, 86), l'arbre en métal (36) étant relié au manchon (72, 86) de manière à transmettre un couple, et le bout d'arbre de diamètre constant (70) étant emmanché avec ajustement serré dans le manchon (72, 86), caractérisé en ce que l'emmanchement avec ajustement serré du bout d'arbre (70) du rotor dans le manchon (72, 86) est effectué au moyen d'un premier et d'un deuxième alésages (76, 77), ayant chacun un diamètre constant, et d'une partie intermédiaire (79) entre ces alésages, le premier alésage (76) ayant un diamètre qui est plus petit que celui du deuxième alésage (77) et étant situé vers l'intérieur par rapport au deuxième alésage.

2. Assemblage suivant la revendication 1, caractérisé en ce que le manchon est sous la forme d'un manchon à extrémité ouverte (72) dans lequel est reçu l'arbre en métal (36).

3. Assemblage suivant la revendication 2, caractérisé en ce que le manchon (72) est brasé à l'arbre en métal (36).

4. Assemblage suivant la revendication 1, caractérisé en ce que le manchon (86) comporte une extrémité ouverte et une extrémité fermée, l'arbre en métal (36) étant fixé à l'extrémité fermée ou solidaire de celle-ci.

5. Assemblage suivant l'une quelconque des revendications précédentes, caractérisé en ce que le bout d'arbre (70) du rotor comporte une gorge annulaire (71) dans laquelle est serti le manchon (72, 86).

6. Assemblage suivant l'une quelconque des revendications précédentes, caractérisé en ce que la partie conique présente une conicité comprise entre 0,5 et 2,0°.

7. Assemblage suivant l'une quelconque des revendications précédentes, caractérisé en ce que le manchon (72, 86) comprend des moyens (80, 82) formant une étanchéité avec le carter (44) dans lequel est placé l'assemblage.

8. Assemblage suivant la revendication 7, caractérisé en ce que les moyens formant l'étanchéité comprennent un élément de moyeu s'étendant vers l'extérieur sur le manchon (72, 86) et définissant une surface annulaire (80) coaxiale à l'axe du manchon (72, 86), la surface (80) comportant une gorge annulaire (82) disposée pour coopérer avec un anneau (60) associé au carter (44).

9. Turbocompresseur (10) pour moteur à combustion interne (12), comprenant: un rotor de turbine en céramique (32) entraîné par les gaz d'échappement et comportant un bout d'arbre coaxial (70), monté dans un carter de turbine (34); une roue de compresseur (26) pour comprimer l'air d'alimentation du moteur (12), placée dans un carter de compresseur (24); un carter central (38) placé entre le carter de turbine (34) et le carter de compresseur (24) et comportant des paliers (50) pour supporter de façon tournante un arbre en métal (36) sur lequel est montée la roue de compresseur (26); des moyens de lubrification pour lubrifier et refroidir les paliers (50); et un manchon (72, 86) reliant le rotor de turbine en céramique (32) à l'arbre en métal (36) pour une transmission de couple, le bout d'arbre (70) de diamètre constant étant emmanché avec ajustement serré dans le manchon, le manchon (72, 86) comportant un agencement d'étanchéité (60, 82) pour empêcher le passage de lubrifiant du carter central (38) vers le carter de turbine (34), caractérisé en ce que l'emmanchement avec ajustement serré du bout d'arbre (70) du rotor dans le manchon (72, 86) est effectué au moyen d'un premier et d'un deuxième alséages (76, 77) chacun de diamètre constant, et d'une partie intermédiaire (79) entre ces alésages, le premier alésage (76) ayant un diamètre qui est plus petit que celui du deuxième alésage (77) et étant situé vers l'intérieur par rapport au deuxième alésage.

10. Turbocompresseur suivant la revendication 9, caractérisé en ce que le manchon (36) est un manchon sensiblement cylindrique (72) comportant un alésage coaxial traversant, le bout d'arbre (70) du rotor (32) étant emmanché à la presse à froid dans une extrémité de l'alésage, et caractérisé en outre en ce que l'agencement d'étanchéité est réalisé en premier lieu par le fait que l'arbre en métal (36) est brasé dans l'autre extrémité de l'alésage, et en second lieu par un élément de moyeu s'étendant radialement vers l'extérieur (80), prévu à une extrémité du manchon (72) et comportant une gorge annulaire périphérique (82), et par un anneau de piston (60) logé dans ladite gorge annulaire et qui coopère également avec le carter central (38) pour empêcher le lubrifiant de s'écouler au-delà de l'anneau de piston (60).

FIG. 1

FIG. 2

FIG. 3

FIG. 4

FIG. 7

FIG. 5

FIG. 6